# EUROPEAN PATENT SPECIFICATION

(11) **EP 1 516 472 B1**
(45) Date of publication and mention of the grant of the patent: **02.04.2008**
(21) Application number: 03724517.2
(22) Date of filing: 09.05.2003
(51) Int. Cl.: H04L 29/06, H04L 29/12

(54) **CONNECTION OF NEXT GENERATION MOBILE NODES ACROSS PREVIOUS GENERATION NETWORKS TO NEXT GENERATION NETWORKS**
VERBINDUNG VON MOBILEN NETZKNOTEN DER NÄCHSTEN GENERATION ÜBER NETZWERKE FRÜHERER GENERATION ZU NETZWERKEN NÄCHSTER GENERATION
CONNEXION DE NOEUDS MOBILES DE LA PROCHAINE GENERATION AVEC DES RESEAUX DE LA PROCHAINE GENERATION VIA DES RESEAUX DE LA GENERATION ANTERIEURE

(30) Priority: 25.06.2002 US 183188
(43) Date of publication of application: 23.03.2005
(73) Proprietor: Intel Corporation, Santa Clara, CA 95052 (US)
(72) Inventor: LIU, Changwen, Portland, OR 97229 (US)
(74) Representative: Beresford, Keith Denis Lewis
(86) International application number: PCT/US2003/014424
(87) International publication number: WO 2004/002110

(56) References cited:
- US-B1- 6 172 986
- R. CALHOUN; T. HILLER; J.MCCANN: "IPv6 over Mobile IPv4" INTERNET DRAFT, pages 1-9, XP015032256

## Description

### BACKGROUND

Network protocols set out a specified format and signalling procedures for devices to communicate. Examples include Internet Protocol, and the often simultaneously employed Transmission Control Protocol, HyperText Transmission Protocol, among many others. As a new version of a protocol is deployed, there may be problems with compatibility between the new protocol version and the previous version.

For example, most Internet domains and sites currently use Internet Protocol version 4 (IPv4). However, some sites and domains are migrating to Internet Protocol version 6 (IPv6), sometimes also referred to as Internet Protocol Next Generation (IPng). IPv6 is not compatible with IPv4. The use of lPv6 provides a different addressing structure that allows for more addresses to be used, as IPv4 may 'run out' of available addresses. While the new addressing structure has more available addresses, the change of address structure contributes to the incompatibility between IPv6 and IPv4.

This type of incompatibility has a large impact on mobile users. Mobile users employing the newer version of the protocol but being capable of both versions may roam into an area in which the only available connections are of the older version. This limits the users from being able to communicate in the new version with the network. For example, a user having a mobile device that is IPv6 capable may roam into an area that is IPv4 capable only and may lose the ability to communicate in IPv6.

US-6,172,986 discloses a system in which a mobile node moves from a first a network that can handle two types of IP, e.g. IPv4 and IPv6, to a second network that can communicate in accordance with only one type of IP. When the mobile node sends a message after it has moved a header containing both home and foreign addresses for the first type of IP is added to a header containing both home and foreign addresses for the second type of IP.

In a prior art approach used in the IP realm, documented in Internet Draft "IPv6 over Mobile IPv4," specifies a Mobile IPv4 extension that may be used to negotiate an IPv6 address from the Mobile IPv4 home agent. This turns the Mobile IPv4 mobile agent into the first hop IPv6 router for the mobile node. However, it requires that the first 64-bit prefix of each mobile node IPv6 address be the same as that of one of the Mobile IPv4 home agent Interfaces. This does not work for IPv6 sites with multiple subnets.

According to one aspect, the present invention provides a method for allowing a next generation mobile node to communicate across a previous generation network (30), the method comprising: discovering (40) a previous generation mobility agent (22); obtaining (41) a previous generation care-of address for the mobile node from the mobility agent and characterized in that the method includes registering the previous generation care-of address with a previous generation home agent of the mobile node, determining if the mobile node has a previous generation home address, and obtaining a previous generation home address if the mobile node does not have one; and constructing (43) an intergeneration address which is a next generation network care-of address, from the previous generation home address assigned to the mobile node; and creating (44) an intergeneration pseudo interface. Where next generation packets are encapsulated inside previous generation packets or are decapsulated from previous generating packets.

According to another aspect, the invention provides a mobile device, comprising a communications port (64) to allow the mobile device to communicate with a network; a memory (62) to store a previous generation home address; and a processor (60) to create (44) an intergeneration pseudo-interface where next generation packets are encapsulated inside previous generation packets or are decapsulated from previous generation packets; establish communication with a mobility agent through the pseudo-interface; and obtain (41) a previous generation care-of address from mobility agent; characterized in that the processor is operative to construct, an intergeneration address which is a next generation care-of address, from the previous generation have address; and register (42) the previous generation care-of address with a previous generation home agent of the network.

The invention also provides an article of machine readable code which, when executed will cause the machine to perform the method of the invention.

### BRIEF DESCRIPTION OF THE DRAWINGS

Embodiments of the invention may be best understood by reading the disclosure with reference to the drawings, wherein:
Figure 1 shows an embodiment of a mobile node using a new protocol version roaming into a domain using an old protocol version.
Figure 2 shows a flowchart of an embodiment of a method to allow next generation nodes to communicate across previous generation networks.
Figure 3 shows an embodiment of a degenerated intergeneration site.
Figure 4 shows a graphic representation of a packet transmission between a mobile node and its home agent.
Figure 5 shows an embodiment of a mobile device that may function as a mobile node.

### DETAILED DESCRIPTION OF THE EMBODIMENTS

Current network protocols, such as the Internet Protocol version 4 and version 6, route packets of data to a destination according to its network address. Generally, these addresses are associated with a fixed network location. In mobile networking, the mobile device may change the point of attachment to the network, or address, while communicating with other network nodes. Having to obtain a new network address and switch application communication sessions to the new address every time the device moves to a different point of attachment makes truly mobile networking impractical.

In order to assist in understanding the invention, several illustrations and examples from Internet Protocol (IP or IPv4) networks will be used. During this description, examples of the Internet Protocol will be used to assist in understanding embodiments of the invention. However, there is no limitation to the applicability of the embodiments of the invention. They may be applied to IPv6 and other networking upgrades that result in incompatibilities.

In discussion of examples, there may be references to papers of the Internet Engineering Task Force. Individuals or teams may submit drafts to the various working groups of the IETF, which are available to the public but are works in progress. These are referred to as Internet-Drafts. If the drafts are being considered for standards, they are published as Requests For Comments (RFCs) with an identifying number. For example, Mobile Internet Protocol version 4 (Mobile IP) is discussed in RFC 3220 "IP Mobility Support for IPv4," RFC 2794, and RFC 3024. Other related documents include Internet Draft "Mobility Support in IPv6," and "IPv6 over Mobile IPv4", which are discussing Mobile Internet Protocol version 6 (Mobile IPv6)..

In Mobile IP, the need to have a fixed address for the mobile device's destination is overcome using a combination of a home address and a care-of address. A home address is an IP address that is assigned to a mobile node. It remains unchanged regardless of where the node is attached to the Internet. When a mobile node is at 'home' it is attached to the link at its home network, where the home network is a network having a network prefix matching the prefix of the mobile node's home address. A router resident on the mobile node's home network that tunnels packets for delivery to the mobile node when it is away from home is referred to as a home agent (HA).

A care-of address (CoA) is the termination point of a tunnel towards a mobile node, for packets to be forwarded to the mobile node when it is away from home. CoAs are generally one of two different types. A foreign agent (FA) CoA is an address of a foreign agent with which the mobile node is registered. A co-located CoA is an externally obtained local address with which the mobile node has associated with one of its own network interfaces. A foreign agent (FA) is a router or other network device on a network the mobile node is 'visiting,' or any network that does not have the same network prefix as the mobile node's home address. The FA provides routing services to the registered mobile node. For data transfers originating from the mobile node, the foreign agent may serve as the default router for the registered mobile nodes.

In a typical situation, a mobile node roams inside its own network. While inside its home network, it does not require mobility services, such as a CoA. Once the mobile node roams outside its home network, however, it will require mobility services, including a CoA. Generally, a mobile node determines that it is outside its home network when it receives an agent advertisement from a local agent that indicates that the agent is on a network other than the mobile node's home network. Agent advertisements are a variation of router advertisements, which are used in the Internet communication structure to notify data-transmitting devices of a router's availability.

Upon receiving an agent advertisement that indicates that the mobile node is away from home, the mobile node will obtain a CoA. The CoA will be obtained from the router advertisements from mobility agents, which are usually foreign agents supplying mobility services. The CoA can also be obtained by other means such as DHCP (dynamic host configuration protocol) or manual configuration. Once the mobile node has obtained a CoA, it registers the CoA with its home agent, thereby notifying the home agent of the forwarding address. Once the care-of address is registered, the home agent will intercept packets destined to mobile node's home address and forward the packets to the mobile node's CoA, typically by tunnelling the packets to the CoA.

In tunnelling, the home agent inserts a new tunnel header in front of the packet, in addition to any existing headers, such as an IP header. The new tunnel header uses the mobile node's CoA as the destination address. In some protocols, such as IP-within-IP, the entire original IP header is preserved as part of the tunnel packets payload data.

However, the above discussions assume that the mobile node, all of the intermediate agents, and the network all use the same protocol version. With the introduction of a next generation protocol that is incompatible with the previous generation protocol, these processes break down and no longer work. A mobile node using the next generation protocol cannot communicate if it roams to a point of attachment that requires communication across a previous generation network.

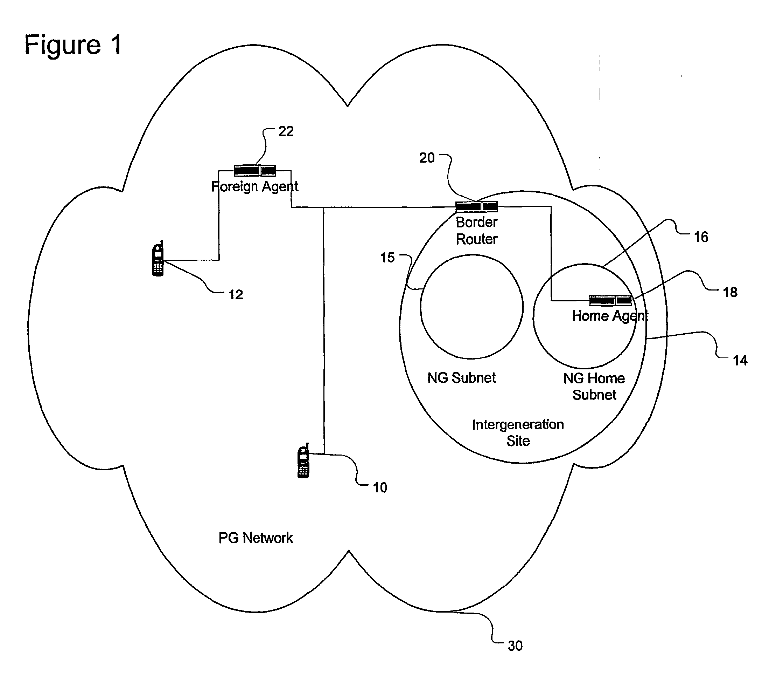

An example of such a situation is shown in Figure 1. Mobile nodes 10 and 12 have roamed outside their next generation (NG) network 14. Their NG network site 14 is what will be referred to as an intergeneration site, a type of NG network during transition period. The intergeneration site 14 have multiple NG subnets, with 15 and 16 being two of them. It is the subnet 16 that is the home subnet for mobile nodes 10 and 12. The intergeneration site in the IPv4/IPv6 example is referred to as a '6to4' site.

The specification of the home network 14 as an intergeneration site means that the NG site is running the NG protocol using intergeneration addresses, and contains at least one intergeneration host (not shown) and one intergeneration router, such as border router 20. The intergeneration address is an address that is constructed using the NG protocol with an intergeneration prefix. The border router, or intergeneration router, is a NG router that supports an intergeneration pseudo-interface. An intergeneration pseudo-interface is the point at which the NG packets are encapsulated inside PG packets or decapsulated from PG packets, typically logically equivalent to a NG interface with the link layer being a PG network. In addition to the intergeneration addresses, the NG site may simultaneously run other NG address types, such as native NG prefixes.

In the specific example, the intergeneration router 20 would be referred to as a '6to4' router, and the home network 14 would be a 6to4 site. The two subnets 15 and 16 would be two IPv6 subnets, and the home agent would be an IPv6 router. The network 30 would be an IPv4 network, the foreign agent 22 would be a Mobile IPv4 agent, and the two mobile nodes would be IPv6 mobile nodes that are Mobile IPv4 capable.

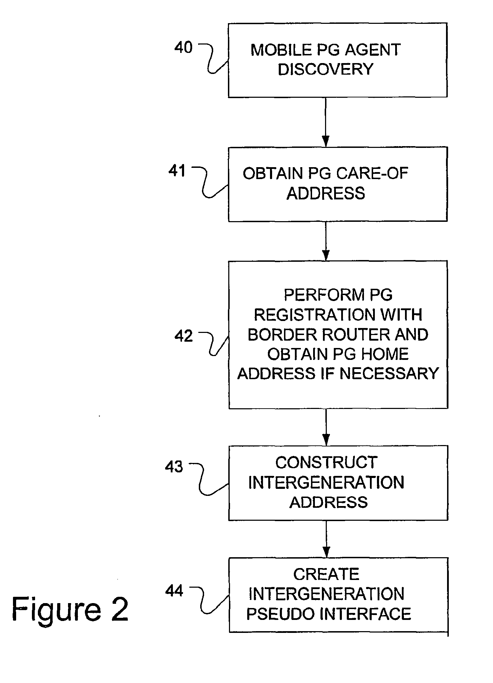

It is possible to utilize the capabilities of an intergeneration site with its related intergeneration equipment to allow a NG mobile node from this intergeneration site to continue to communicate even if it roams into an area where the only connectivity is through a PG network. An embodiment of a method to allow next generation nodes to communicate across previous generation networks is shown in flowchart form in Figure 2.

When a mobile node detects that it has roamed into the PG area, it first performs the mobility agent discovery process discussed above, under the PG protocol at 40. From the discovered mobility agents, such as the foreign agent 22 of Figure 1, the mobile node obtains its PG CoA at 41. The PG CoA allows the mobile node to communicate between itself and its PG home agent, which is the border router.

The mobile node can now register its PG CoA at 42 with the PG home agent. If initially it does not have a PG home address, it must also get the PG home address from the border router with the registration at 42. As will become clearer later, the border router 20 of Figure 1 will act as the PG home agent for the mobile node and is able to assign a PG home address to the mobile node.

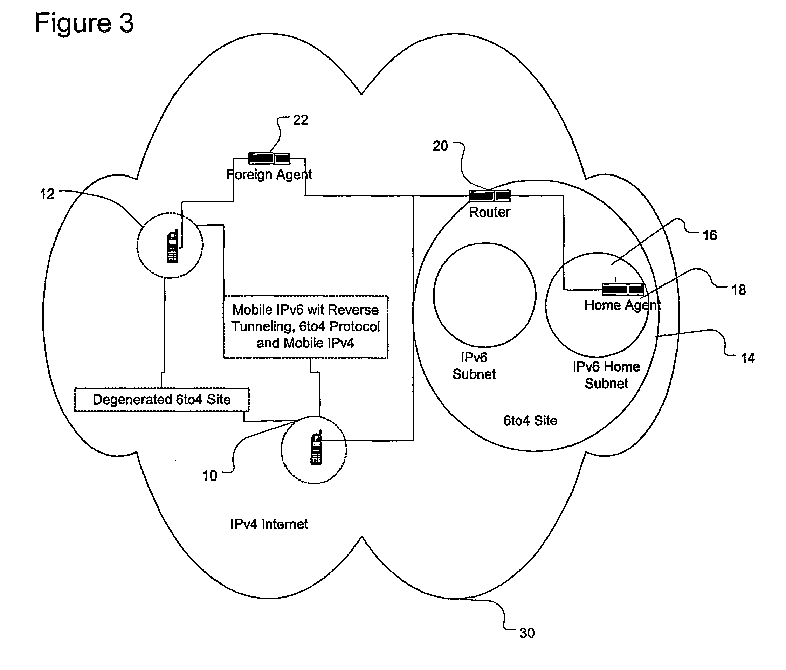

The mobile node then constructs an intergeneration address at 43. This is the NG CoA of the mobile node using an intergeneration prefix of its PG home address. At 44, the mobile node creates an intergeneration pseudo-interface based upon the PG home address. Essentially, the mobile node constructs itself as a degenerated intergeneration site. The site is 'degenerated' in that it consists of the mobile node itself acting as both an intergeneration host and an intergeneration Router. This will be discussed in more detail with regard to Figure 3.

The node also updates its intergeneration address derived from the PG home address, if not already updated or if its registration time has expired, with its NG home agent. When the node moves from one PG domain to another, it does not have to perform a NG binding update unless its previous NG binding has expired. A NG binding is the mobile node's NG home address, NG CoA and the binding update lifetime, or how long mobility agents can use the binding. Once the node is registered/updated in both PG and NG, NG packets into and out of the mobile node can be transmitted. If the node roams back into a NG domain, whether or not it is its home network, the node follows NG protocols for binding updates, except that it should not send any binding updates to establish forwarding from the intergeneration CoA derived from its PG home address.

As can be seen in Figure 3, the mobile nodes 10 and 12 are now functioning as isolated intergeneration sites. They send and receive NG packets encapsulated inside PG headers, using its PG home address as well as the PG CoA. The PG network 'sees' the packets being received and sent from the border router 20. In actuality, the packets are being sent and received from the NG home agent 18, through the border router. However, the PG encapsulation allows the NG packets to be transmitted with no loss of communications.

Using the example of the IP environment, the process would be for the mobile nodes 10 and 12 to obtain or pre-configure IPv4 addresses from a pool of addresses managed by the border router 20 and then use these as their IPv4 home addresses. The mobile nodes would then construct a 6to4 address using their IPv4 home addresses and create corresponding 6to4 pseudo-interfaces. Once the 6to4 pseudo-interfaces are constructed, the mobile nodes then perform Mobile IPv6 with their NG home agent. After that, the mobile nodes 10 and 12 starts to exchange the IPv6 data traffic with their NG home agent.

Some modifications may have to be made to the border routers to allow this process to occur. For example, the intergeneration router manages a pool of PG addresses that may be globally non-routable due to address depletion and the router must act as the mobile PG home agent for the address pool. Furthermore, mobile nodes in the PG domain should not use their PG addresses to initiate application communication sessions. These modifications allow the transmission of packets to occur between a NG mobile node and its NG home agent across a PG network.

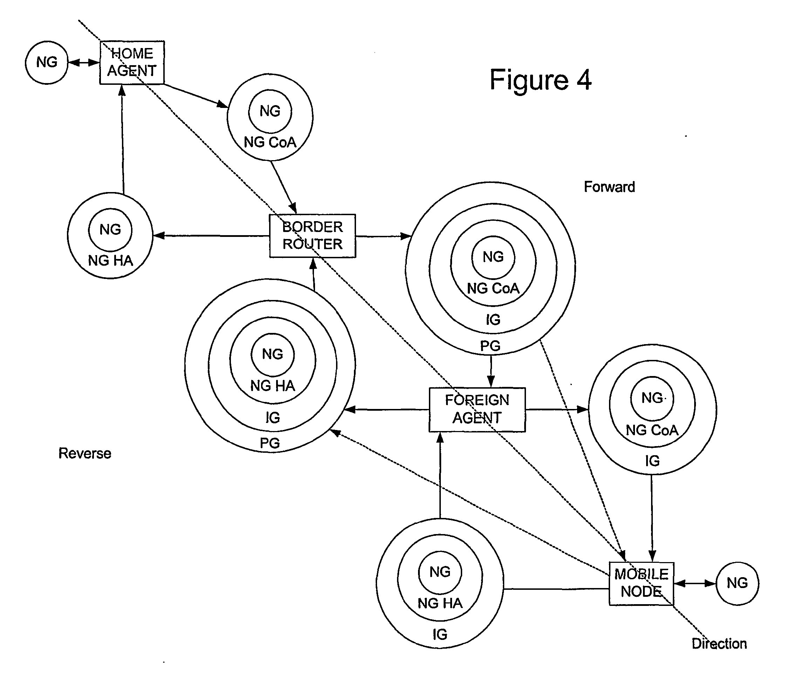

Packets transmitted towards the mobile node will be referred to as the forward direction, and packets transmitted from the mobile node will be referred to as the reverse direction. A graphic representation of one embodiment of packet transmissions is shown in Figure 4.

The NG home agent receives a data packet in accordance with the next generation protocol (NG). It encapsulates it in accordance with the next generation mobility (Mobile NG) protocol with the mobile node's intergeneration CoA. This is then sent, via the NG site internal routing mechanisms to the border router. The border router then encapsulates the packet in accordance with both the intergeneration protocol (IG) and the previous generation (PG) mobility protocol (Mobile PG). This is then routing across the PG network to either the foreign agent, if a foreign agent CoA is used, or directly to the mobile node, if a co-located CoA is used.

If a foreign agent CoA is used, the foreign agent then decapsulates the outmost PG encapsulation and forwards the IG encapsulated packet to the mobile node. The mobile node performs two additional layers of decapsulations to obtain the original NG packet. If a co-located CoA is used, the mobile node performs all three layers of decapsulation to obtain the original NG packet. This is termed the forward direction and is shown as being above the direction line in the figure.

The reverse direction is shown below the direction line. The mobile node encapsulates the NG packet, either with the Mobile NG reverse tunneling, the intergeneration protocol (IG), and the Mobile PG reverse tunneling, if no foreign agent is used, or just with the first two. If no foreign agent was used, the mobile node sends the packet directly to the border router. Otherwise, the mobile node sends the packet to the foreign agent, which then applies the PG encapsulation for reverse tunneling. Optionally, both FA and the mobile node may leave out the Mobile PG reverse tunneling. The border router then decapsulates either the first two layers of encapsulation, or just one if Mobile PG reverse tunneling is not applied and transmits the packet to the NG home agent. The home agent removes the Mobile NG encapsulation to obtain the original NG data packet.

Routing optimization for Mobile NG must be disregarded. For example, Mobile IPv6 offers routing optimization. However, when the nodes are in IPv4 domains, the routing optimization is disregarded because the IPv4 home addresses are usually private and the IPv6 packet encapsulated by the IPv4 home address cannot typically be routed across the global IPv4 towards the mobile nodes.

In this manner, mobile nodes of a next generation network site can communicate across the previous generation network with other NG nodes, mobile or not. This allows newer NG network to be propagated gradually a site a time without requiring the newer protocol to be deployed everywhere and any changes to deployed Mobile PG infrastructure.

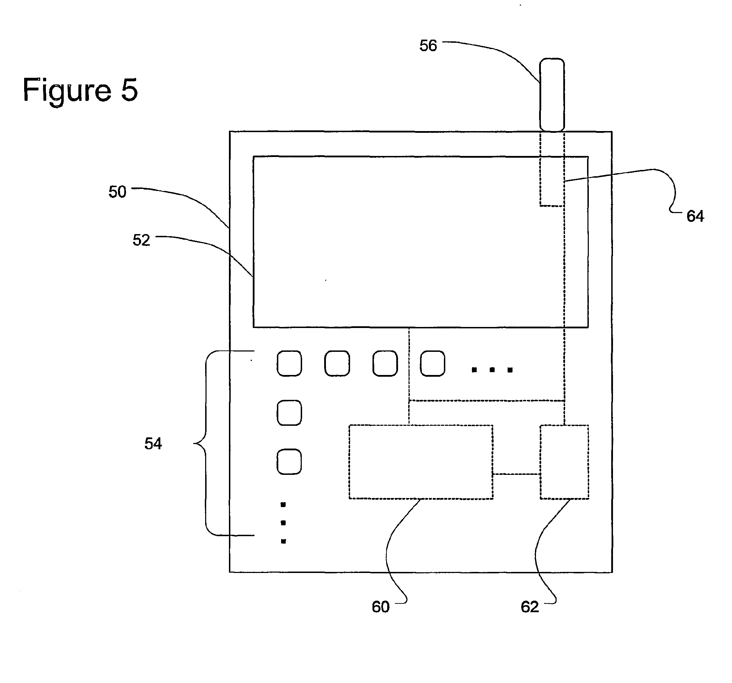

The embodiments of the invention may be directed to a device that can function as a mobile node, or may be implemented by an article of machine-readable code. Figure 5 shows an embodiment of a mobile device that may function as a mobile node. Externally the device 50 may have a user interface 52, such as a display, and control buttons such as a keypad or keyboard 54. The device may also have either wireless link, such as an antenna, a cable or other type of connector 56 that allows connection to a network. The mobile device may be a cellular phone, a portable computer such as a palmtop computer, a notebook or laptop computer, or a network appliance, as examples.

Internally, the device may have a memory 62 to store the previous and next generation home addresses. As discussed previously, the device may already have a predetermined PG home address. Alternatively, the memory would store the previous generation home address when it is obtained through the communications port 64. The memory may be any type of storage, such as a dynamic random access memory (DRAM), a static RAM, and a storage register resident on the processor 60, among many other options.

The processor 60 is to obtain the previous generation care-of address. In accordance with one embodiment of the invention, the processor would first obtain a previous generation care-of address from the mobility agent. The processor would then constructs an intergeneration address using the previous generation home address from the memory. The processor would then create an intergeneration pseudo-interface using the intergeneration address and use that pseudo-interface to establish communications with a NG mobility agent. It is possible that the processor may also be upgraded with software, in the form of machine-readable code on an article, to perform these tasks.

The article contains machine-readable code that, when executed, causes the machine to perform the processes and methods of embodiments of the invention. The article may be a diskette, compact disc, hard drive or other type of storage upon which are stored the instructions. The device may be one of a various configuration of personal computer, such as a desktop computer, a palmtop computer, or a notebook, or a network appliance, cellular phone, among many other options.

Thus, although there has been described to this point a particular embodiment for a mobile node and a method of connecting next generation mobile nodes using previous generation networks, it is not intended that such specific references be considered as limitations upon the scope of this invention except in-so-far as set forth in the following claims.

## Claims

1. A method for allowing a next generation mobile node to communicate across a previous generation network (30), the method comprising:
discovering (40) a previous generation mobility agent (22);
obtaining (41) a previous generation care-of address for the mobile node from the previous generation mobility agent (22) ; and
creating (44) an intergeneration pseudo interface where next generation packets are encapsulated inside previous generation packets or are decapsulated from previous generating packets;
wherein the method includes registering (42) the previous generation care-of address with a previous generation home agent of the mobile node, determining if the mobile node has a previous generation home address, and obtaining a previous generation home address if the mobile node does not have one;
and **characterised by** constructing (43) an intergeneration address which is a next generation network care-of address, from the previous generation home address assigned to the mobile node

2. The method of claim 1, wherein the method further comprises performing a binding update between the mobile node and a next generation home agent in its next generation home network.

3. The method of claim 1, wherein the registration is between the mobile node and a border router on the home site.

4. The method of claim 1, wherein the method further comprises establishing a reverse tunnel between the mobile node and a next generation home agent.

5. The method of claim 3, wherein routing optimization is disregarded for the reverse tunnel in the next generation mobility protocol.

6. The method of claim 1, wherein the previous generation care-of address further comprises a foreign agent care-of address.

7. The method of claim 1, wherein the previous generation care-of address further comprises a co-located care-of address.

8. The method of claim 1 wherein the next generation is Internet Protocol version 6, the previous generation is Internet Protocol version 4, and the intergeneration is 6to4.

9. An article of machine-readable code that, when executed, cause the machine to perform a method comprising:
discovering (40) a previous generation mobility agent (22);
obtaining (41) a previous generation care-of address for the mobile node from the previous generation mobility agent (22); and
creating (44) an intergeneration pseudo interface where next generation packets are encapsulated inside previous generation packets or are decapsulated from previous generating packets;
wherein the method includes registering (42) the previous generation care-of address with a previous generation home agent of the mobile node, determining if the mobile node has a previous generation home address, and obtaining a previous generation home address if the mobile node does not have one; and **characterised by** constructing (43) an intergeneration address which is a next generation network care-of address, from the previous generation home address assigned to the mobile node.

10. The article of claim 9, wherein the article contains further code that, when executed, causes the machine to establish a reverse tunnel between the mobile node and a next generation home agent.

11. The method of claim 1, wherein the next generation mobile node is an IPv6 node and the previous generation network is an IPv4 network.

12. A mobile device, comprising:
a communications port (64) adapted to allow the mobile device to communicate with a network;
a memory (62) adapted to store a previous generation home address; and
a processor (60) adapted to create (44) an intergeneration pseudo-interface where next generation packets are encapsulated inside previous generation packets or are decapsulated from previous generation packets;
and adapted to establish communication with a previous generation mobility agent (22) through the pseudo-interface; and
adapted to obtain (41) a previous generation care-of address from the previous generation mobility agent (23);
**characterized in that** the processor is operative to construct (43) an intergeneration address which is a next generation care-of address, from the previous generation home address; and to register (42) the previous generation care-of address with a previous generation home agent of the network.

13. The mobile device of claim 12, wherein the memory is further to store a previous generation home address after it is obtained through the communications port.

14. The mobile device of claim 12, wherein the device comprises one of the group comprised of:
a cellular phone, a palmtop computer, a notebook computer, and a network appliance.

## Patentansprüche

1. Verfahren zum Ermöglichen der Kommunikation von einem mobilen Knoten einer nächsten Generation über ein Netzwerk (30) einer vorherigen Generation, wobei das Verfahren die folgenden Schritte umfaßt:
Erkennen (40) eines Mobilitätsagenten (22) der vorigen Generation,
Erhalten (41) einer c/o-Adresse der vorigen Generation für den mobilen Knoten vom Mobilitätsagenten (22) der vorigen Generation und
Erzeugen (44) einer Zwischengenerationspseudoschnittstelle, bei der Pakete der nächsten Generation in Paketen der vorigen Generation eingekapselt oder aus Paketen der vorigen Generation ausgepackt werden,
wobei das Verfahren ferner die folgenden Schritte enthält:
Registrieren (42) der c/o-Adresse der vorigen Generation bei einem Heimagenten der vorigen Generation des mobilen Knoten,
Bestimmen, ob der mobile Knoten eine Heimadresse der vorigen Generation hat, und
Erhalten einer Heimadresse der vorigen Generation, falls der mobile Knoten eine solche nicht hat,
**gekennzeichnet durch** das Aufbauen (43) einer Zwischengenerationsadresse, die eine c/o-Adresse des Netzwerks der nächsten Generation ist, aus der dem mobilen Knoten zugeschriebenen Heimadresse der vorigen Generation.

2. Verfahren nach Anspruch 1, wobei das Verfahren ferner die Ausführung einer Bindungsaufdatierung zwischen dem mobilen Knoten und einem Heimagenten der nächsten Generation in seinem Heimnetzwerk der nächsten Generation umfaßt.

3. Verfahren nach Anspruch 1, wobei die Registrierung zwischen dem mobilen Knoten und einem Grenzrouter auf der Heimseite stattfindet.

4. Verfahren nach Anspruch 1, wobei das Verfahren ferner das Einrichten eines Umkehrtunnels zwischen dem mobilen Knoten und einem Heimagenten der nächsten Generation umfaßt.

5. Verfahren nach Anspruch 3, wobei die Routing-Optimierung für den Umkehrtunnel im Mobilitätsprotokoll der nächsten Generation außer Acht gelassen wird.

6. Verfahren nach Anspruch 1, wobei die c/o-Adresse der vorigen Generation eine c/o-Adresse eines Fremdagenten umfaßt.

7. Verfahren nach Anspruch 1, wobei die c/o-Adresse der vorigen Generation ferner eine nebengeordnete c/o-Adresse umfaßt.

8. Verfahren nach Anspruch 1, wobei die nächste Generation Internet Protocol Version 6, die vorigen Generation Internet Protocol Version 4 und die Zwischengeneration 6to4 sind.

9. Gegenstand maschinenlesbaren Codes, der, wenn er ausgeführt wird, die Maschine ein Verfahren ausführen lässt, das die folgenden Schritte umfaßt:
Erkennen (40) eines Mobilitätsagenten (22) einer vorigen Generation,
Erhalten (41) einer c/o-Adresse der vorigen Generation für den mobilen Knoten vom Mobilitätsagenten (22) der vorigen Generation und
Erzeugen (44) einer Zwischengenerationpseudoschnittstelle, bei der Pakete der nächsten Generation in Paketen der vorigen Generation eingekapselt oder aus den Paketen der vorigen Generation ausgepackt werden,
wobei das Verfahren ferner die folgenden Schritte umfaßt:
Registrieren (42) der c/o-Adresse der vorigen Generation bei einem Heimagenten der vorigen Generation des mobilen Knotens, Bestimmen, ob der mobile Knoten eine Heimadresse der vorigen Generation aufweist, und
Erhalten einer Heimadresse der vorigen Generation, falls der mobile Knoten eine solche nicht hat,
**gekennzeichnet durch** das Aufbauen (43) einer Zwischengenerationsadresse, die eine c/o-Adresse des Netzwerks der nächsten Generation ist, aus der dem mobilen Knoten zugeschriebenen Heimadresse der vorigen Generation.

10. Gegenstand nach Anspruch 9, wobei der Gegenstand ferner Code enthält, der, wenn er ausgeführt wird, die Maschine einen Umkehrtunnel zwischen dem mobilen Knoten und einem Heimagenten der nächsten Generation einrichten läßt.

11. Verfahren nach Anspruch 1, wobei der mobile Knoten der nächsten Generation ein IPv6-Knoten und das Netzwerk der vorigen Generation ein IPv4-Netzwerk sind.

12. Mobiles Gerät, umfassend
einen Kommunikationsport (64), der dazu ausgelegt ist, dem mobilen Gerät die Kommunikation mit einem Netzwerk zu ermöglichen,
einen Speicher (62), der dazu ausgelegt ist, eine Heimadresse der vorigen Generation zu speichern, und
einen Prozessor (60), der dazu ausgelegt ist, eine Zwischengenerationspseudoschnittstelle zu erzeugen (44), bei der Pakete der nächsten Generation in Paketen der vorigen Generation eingekapselt oder aus Paketen der vorigen Generation ausgepackt werden,
Kommunikation mit einem Mobilitätsagenten (62) der vorigen Generation über die Pseudoschnittstelle einzurichten und eine c/o-Adresse der vorigen Generation vom Mobilitätsagenten (22) der vorigen Generation zu erhalten,
**dadurch gekennzeichnet, daß** der Prozessor darauf eingerichtet ist, eine Zwischengenerationsadresse, die eine c/o-Adresse der nächsten Generation ist, aus der Heimadresse der vorigen Generation aufzubauen (43) und die c/o-Adresse der vorigen Generation bei einem Heimagenten der vorigen Generation des Netzwerks zu registrieren (42).

13. Mobilitätsgerät nach Anspruch 12, wobei der Speicher ferner dazu ausgelegt ist, eine Heimadresse der vorigen Generation abzuspeichern, nachdem sie über den Kommunikationsport erhalten wurde.

14. Mobilitätsgerät nach Anspruch 12, wobei das Gerät ein Mobiltelefon, einen Palmtop-Computer, ein Notebook oder eine Netzwerkanwendung umfaßt.

## Revendications

1. Procédé destiné à permettre à un noeud mobile de génération suivante de communiquer au travers d'un réseau de génération précédente (30), le procédé comprenant :
la découverte (40) d'un agent de mobilité de génération précédente (22) ;
l'obtention (41) d'une adresse temporaire de génération précédente pour le noeud mobile en provenance de l'agent de mobilité de génération précédente (22) ; et
la création (44) d'une pseudo-interface intergénération dans laquelle des paquets de génération suivante sont encapsulés dans des paquets de génération précédente, ou sont désencapsulés à partir de paquets de génération précédente ;
le procédé comprenant l'enregistrement (42) de l'adresse temporaire de génération précédente auprès d'un agent de départ de génération précédente du noeud mobile, le fait de déterminer si le noeud mobile a une adresse de départ de génération précédente, et l'obtention d'une adresse de départ de génération précédente si le noeud mobile n'en a pas ; et
**caractérisé par** la construction (43) d'une adresse intergénération qui est une adresse temporaire de réseau de génération suivante à partir de l'adresse de départ de génération précédente attribuée au noeud mobile.

2. Procédé selon la revendication 1, dans lequel le procédé comprend en outre l'exécution d'une mise à jour d'association entre le noeud mobile et un agent de départ de génération suivante dans son réseau de départ de génération suivante.

3. Procédé selon là revendication 1, dans lequel l'enregistrement s'effectue entre le noeud mobile et un routeur de frontière sur le site de départ.

4. Procédé selon la revendication 1, dans lequel le procédé comprend en outre l'établissement d'un tunnel inverse entre le noeud mobile et un agent de départ de génération suivante.

5. Procédé selon la revendication 3, dans lequel l'optimisation du routage n'est pas prise en compte pour le tunnel inverse dans le protocole de mobilité de génération suivante.

6. Procédé selon la revendication 1, dans lequel l'adresse temporaire de génération précédente comprend en outre une adresse temporaire d'agent étranger.

7. Procédé selon la revendication 1, dans lequel l'adresse temporaire de génération précédente comprend en outre une adresse temporaire colocalisée.

8. Procédé selon la revendication 1, dans lequel la génération suivante est le Protocole Internet version 6, la génération précédente est le Protocole Internet version 4, et l'intergénération est désignée 6 à 4.

9. Article de code lisible par machine qui, lorsqu'il est exécuté, fait en sorte que la machine exécute un procédé comprenant :
la découverte (40) d'un agent de mobilité de génération précédente (22) ;
l'obtention (41) d'une adresse temporaire de génération précédente pour le noeud mobile en provenance de l'agent de mobilité de génération précédente (22) ; et
la création (44) d'une pseudo-interface intergénération dans laquelle des paquets de génération suivante sont encapsulés dans des paquets de génération précédente ou sont désencapsulés à partir de paquets de génération précédente ;
le procédé comprenant l'enregistrement (42) de l'adresse temporaire de génération précédente auprès d'un agent de départ de génération précédente du noeud mobile, le fait de déterminer si le noeud mobile a une adresse de départ de génération précédente, et l'obtention d'une adresse de départ de génération précédente si le noeud mobile n'en n'a pas ; et
**caractérisé par** la construction (43) d'une adresse intergénération qui est une adresse temporaire de réseau de génération suivante, à partir de l'adresse de départ de génération précédente attribuée au noeud mobile.

10. Article selon la revendication 9, dans lequel l'article contient un code supplémentaire qui, lorsqu'il est exécuté, fait en sorte que la machine établisse un tunnel inverse entre le noeud mobile et l'agent de départ de génération suivante.

11. Procédé selon la revendication 1, dans lequel le noeud mobile de génération suivante est un noeud IPv6 et le réseau de génération précédente est un réseau IPv4.

12. Dispositif mobile, comprenant :
un port de communication (64) conçu pour permettre au dispositif mobile de communiquer avec un réseau ;
une mémoire (62) conçue pour stocker une adresse de départ de génération précédente ; et
un processeur (60) conçu pour créer (44) une pseudo-interface intergénération dans laquelle des paquets de génération suivante sont encapsulés dans des paquets de génération précédente ou sont désencapsulés à partir de paquets de génération précédente ;
et conçu pour établir une communication avec un agent de mobilité de génération précédente (22) par l'intermédiaire de la pseudo-interface ; et
conçu pour obtenir (41) une adresse temporaire de génération précédente en provenance de l'agent de mobilité de génération précédente (22) ;
**caractérisé en ce que** le processeur a pour fonction de construire (43) une adresse intergénération qui est une adresse temporaire de génération suivante, à partir de l'adresse de départ de génération précédente ; et d'enregistrer (42) l'adresse temporaire de génération précédente auprès d'un agent de départ de génération précédente du réseau.

13. Dispositif mobile selon la revendication 12, dans lequel la mémoire est en outre destinée à stocker une adresse de départ de génération précédente après qu'elle a été obtenue par l'intermédiaire du port de communication.

14. Dispositif mobile selon la revendication 12, dans lequel le dispositif comprend l'un du groupe constitué par :
un téléphone cellulaire, un ordinateur de poche, un ordinateur portable et un appareil de réseau.
